# EUROPEAN PATENT SPECIFICATION

(11) **EP 0 436 608 B1**
(45) Date of publication and mention of the grant of the patent: **21.09.1994**
(21) Application number: 89910952.4
(22) Date of filing: 26.09.1989
(51) Int. Cl.: B01J 20/04, A01K 1/015

(54) **ODOUR ELIMINATING AND LIQUID ABSORBING AGENT**
GERUCHSELIMINIERENDES UND FLUESSIGKEITSABSORBIERENDES MITTEL
AGENT DE DESODORISATION ET D'ABSORPTION DE LIQUIDE

(30) Priority: 27.09.1988 SE 8803407
(43) Date of publication of application: 17.07.1991
(73) Proprietor: KEMIRA KEMI AKTIEBOLAG, S-251 09 Helsingborg (SE)
(72) Inventor: DAHLGREN, Sven-Eric, S-261 61 Landskrona (SE); MULLER, Arthur, S-253 68 Helsingborg (SE); NILSSON, Torsten, S-253 72 Helsingborg (SE)
(74) Representative: Inger, Lars Ulf Bosson
(86) International application number: SE8900516
(87) International publication number: WO9003219

(56) References cited:
- EP-A- 87 001
- EP-A- 210 661
- WO-A-87/03169
- US-A- 3 735 734
- US-A- 4 085 704
- US-A- 4 275 684
- US-A- 4 509 457
- US-A- 4 607 594

## Description

The present invention relates to the use of dicalcium phosphate as an odour eliminating and liquid absorbing agent.

Odour eliminating and liquid absorbing agents have a general use at different types of decontamination of the environment, e.g., in connection with the cleaning and scavenging of public places and locals. One specific area where it is desirous to obtain an effective agent which is simultaneously odour eliminating and liquid absorbing, concerns different types of litters, such as cat litter.

On the market today there are a number of different litter products, type cat sand, whereby most being based on liquid absorbing components, e.g. different types of clays, crushed lightweight concrete, and cellulose containing materials. In EP-B-0 039 522 there is described a liquid absorbing agent based on fibres, inorganic filler material, and one or more additives, such as starch, glue, colouring agents, and a biologically active material, such as an insecticide, fungicide or bactericide. A commercially available cat litter material based on the above mentioned patent contains, according to the list of contents, 60% of cellulose (paper pulp waste), 35% of kaolin, 4% of lime, and 1% of tensides, and consists of pellets having a size of about 7 mm.

All commercially available cat litter products possess however, drawbacks of different kinds, primarily as they are not able to absorb urine and the like type of waste, but annoying smell occurs after a short time, and so, quite often already before the possible liquid absorption has been utilized. This means thus a sanitary problem to people and animals, and that the consumption of cat litter will become relatively higher than what its liquid absorbing capacity allows under the presumption that a bad smelling "cat toilet" is not accepted. Products, mainly based on on clay, will become tacky after use for some time and will stick in a troublesome manner to the box. Further, existing products are not dust-free and several of them can not be flushed down in toilets due to its density or its surface properties.

US-A-4,607,594 discloses the use of i.a. calcium dihydrogenphosphate as a neutralizing agent for eliminating odour from urine. This monocalciumphosphate will, however, not react with the ammonia present in urine, and will thus not be an effective odour eliminating agent.

The object of the present invention is to obtain an agent which is both odour eliminating and liquid absorbing and which furthermore does not possesses such drawbacks as present at similar products described above, as well as a process for its preparation thereof.

For this purpose an odour eliminating and liquid absorbing agent is disclosed which is given in claim 1.

The agent according to the invention is thus used in the preparation of agglomerates composed by fine particle components. As odour eliminating component the agent contains dicalcium phosphate, CaHPO₄x2H₂O, in active amounts. A liquid absorbing agent is enclosed as well preferably in an amount of 60 to 70 % by weight based on the total weight. Precipitated silica or other silicic acid with a high porosity is very suitable as a liquid absorbing component. Preferably, the agent further contains a fine particle mineral based binding agent, as well, in an amount of 10 to 20 % by weight, based on the total weight. The binding agent is preferably a plastic clay, e.g., a so called ball clay (grey clay).

At the preparation of the agent the ingoing components are primarily dry mixed, optionally after a grinding thereof to equal finess, whereupon water is added to obtain at least a moistened consistency. At the use of silica and clay, 10 to 35 % of water is hereby required, calculated on the dry weight. The moistened mixture is then brought to form larger agglomerates of a predetermined size, which are dried at an elevated temperature to obtain durable agglomerates. The agglomerates are preferably dried at a temperature of between 70 and 120^{o}C.

The formation of agglomerates can be carried out in different ways, but it is preferred to granulate or pelletize the fine particulate mixture. At the granulation, for example an a disc or in a drum in a conventional manner, granules having a size of 3 to 7 mm are desired. At pelleting which is achieved by extrusion, pellets having a size of 3-7 x 3-10 mm are desired.

In order to increase the porosity of the agent and thereby improving the absorption capability it is preferred to add an effervescent agent to the components present prior to or simultaneously with the dry mixing. As a particularly effective and suitable effervescent agent a preferred addition of a about stoichiometric amount of lime stone and an acidic pyrophosphate, e.g. Na₂H₂P₂O₇.

The agent according to the invention can with great advantage be used as a litter in pet toilets and the like, i.e. what is daily called cat litter.

The invention will now be described more in detail in the form of an example.

### EXAMPLE

The following components were dried, ground to the same finess and dry mixed.
69% precipitated silica
10% ball clay (grey clay)
15% dicalcium phosphate, CaHPO₄x2H₂O
3% ground lime stone
3% Na₂H₂P₂O₇
After dry mixing 29 to 43 % of water was added, calculated on the dry weight and different types of agglomerates were prepared according to the below given details.
1. Pellets after drying at 100^{o}C in small pieces.
2. Granulation to about 5 mm diameter and subsequent drying at 75^{o}C.
3. Granulation to about 6 mm in size and subsequent drying at 95^{o}C.
4. Pelleting by means of extrusion to 4x10 mm pellet size and subsequent drying at 100^{o}C.

The thus differently prepared four forms of agglomerates of the agent were then tested in practical tests in a "cat toilet", as well as in a laboratory test. The results of these tests are evident from Table 1 below.

**TABLE 1**

| **Product** | **Absorption** | **Mechanical durability** | **Odour elimination** | **Flushability** | **Reuse** |
|---|---|---|---|---|---|
| 1 | good | 0 | very good | yes | doubtful |
| 2 | good | good | very good | yes | after airdrying |
| 3 | good | good | very good | yes | after airdrying |
| 4 | very good | good | very good | yes | after airdrying |

None of the products caused any problem as to stickyness, e.g. to the feet or fur of the cat.

All products have to be regarded as having obtained the right hardness as the cats which have used the agent for a longer time had have no inconvenience at digging in the agent. To each filling of the cat toilet 600 g were used for 3 cats. The test period for product 1 was 3 days and for the other products it was 4 days.

An increase of the clay content to 15% gave an improved plasticity and mechanical durability without any noticeable problems. A reduction of the silica content to about 64% made the production of pellets by means of extrusion more easy without any noticeable quality problems of the end product.

## Claims

1. The use of dicalcium phosphate, CaHPO₄x2H₂O, as an odour eliminating agent in a composition comprising a liquid absorbing component.

## Patentansprüche

1. Verwendung von Dicalciumphosphat, CaHPO₄.2H₂O als geruchseliminierendes Mittel in einer Zusammensetzung, die eine flüssigkeitsabsorbierende Komponente umfaßt.

## Revendications

1. Utilisation de phosphate bicalcique, CaHPO₄x2H₂O, comme agent désodorisant dans une composition comprenant un composant absorbeur de liquide.
